# EUROPEAN PATENT APPLICATION

(11) **EP 4 195 817 A1**
(43) Date of publication of application: **14.06.2023**
(21) Application number: 20948567.1
(22) Date of filing: 06.08.2020
(51) Int. Cl.: H04W 72/04

(54) **TERMINAL**

(71) Applicant: NTT DOCOMO, INC., Chiyoda-Ku Tokyo 100-6150 (JP)
(72) Inventor: HARADA, Hiroki, Tokyo 100-6150 (JP); KURITA, Daisuke, Tokyo 100-6150 (JP); KUMAGAI, Shinya, Tokyo 100-6150 (JP); SHIBAIKE, Naoya, Tokyo 100-6150 (JP); OKANO, Mayuko, Tokyo 100-6150 (JP); WANG, Jing, Beijing 100190 (CN)
(74) Representative: Hoffmann Eitle
(86) International application number: PCT/JP2020/030275
(87) International publication number: WO 2022/029982

(57) **Abstract**

When a terminal uses a different frequency band from a frequency band which includes one or more frequency ranges, the terminal assumes that a single subcarrier spacing for a synchronization signal block is applied to subcarrier spacing for the data and/or control.

## Description

### [Technical Field]

The present disclosure relates to terminal that performs radio communication, and more particularly to terminal that supports a wide subcarrier spacing such as 960 kHz.

### [Background Art]

3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

Release 15 and Release 16 (NR) of the 3 GPP specify operation in a band that includes multiple frequency ranges, specifically, FR 1 (410 MHz to 7.125 GHz) and FR 2 (24.25 GHz to 52.6 GHz).

Release -17 of the 3 GPP is also considering NR beyond 52.6 GHz to 71 GHz (Non-Patent Literature 1). In addition, Beyond 5G, 5G Evolution, or 6 G (Release -18 and later) aims to support frequencies above 71 GHz.

In the frequency band of 52.6 ~ 71 GHz, support for a wider subcarrier spacing (SCS), for example, 960 kHz is being studied, in consideration of efficient coexistence by providing a channel bandwidth (approximately 2 GHz) equivalent to IEEE (Institute of Electrical and Electronics Engineers) 802.11 ad/ay, and reduction of the overhead of PTRS (Phase Tracking Reference Signal), which contributes to reduction of phase noise (Non-Patent Literature 2).

### [Citation List]

### [Non-Patent Literature]

Non-Patent Literature 1 "New WID on Extending current NR operation to 71 GHz", RP -193229, 3 GPP TSG RAN Meeting # 86, 3 GPP, December 2019
Non-Patent Literature 2 "RAN1 Chairman's Notes", 3GPP TSG RAN WG1 Meeting # 101-e, e-Meeting, 3GPP, June 2020

### [Summary of Invention]

While a wide SCS such as 960 kHz is expected to have the effect described above, it is desirable to minimize the number of SCSs supported for the 52.6 ~ 71 GHz frequency band in consideration of implementation.

However, when a wide SCS such as 960 kHz is supported in a high frequency band such as 52.6 ~ 71 GHz, there are some parts which are not necessarily appropriate in the current 3 GPP specifications.

For example, if a wide SCS, such as 960 kHz, is supported in addition to the existing 120 kHz and 240 kHz, there is a concern that the combination of the SCS for the synchronization signal (SS)/physical broadcast channel (PBCH) block (SS/PBCH block, SSB) in the initial access and the SCS for data and/or control will increase and the processing will become complicated.

Accordingly, the following disclosure has been made in view of the above situation, and it is an object of the present invention to provide a terminal capable of minimizing the influence on the specification of the 3 GPP and avoiding the complexity of the processing particularly relating to the initial access even when a wide SCS such as 960 kHz is supported in a different frequency band from the FR1, FR2, etc., such as a high frequency band such as 52.6 - 71 GHz.

One aspect of the present disclosure is a terminal (UE 200) including: a reception unit (radio signal transmission and reception unit 210) for receiving a synchronization signal block (SSB); and a control unit (control unit 270) that assumes, when using a different frequency band from a frequency band including one or more frequency ranges, that a single subcarrier spacing for the SSB is applied to subcarrier spacing for data and/or control.

### [Brief Description of Drawings]

[FIG. 1]

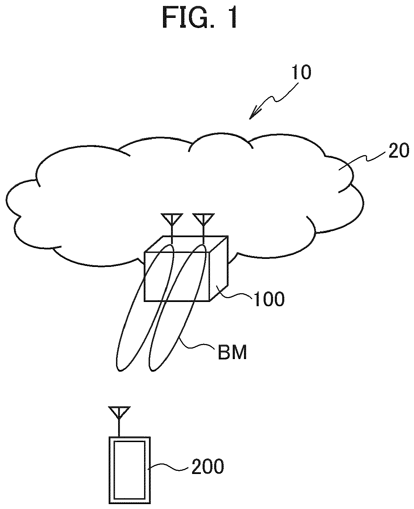

   FIG. 1 is an overall schematic configuration diagram of radio communication system 10.
[FIG. 2]

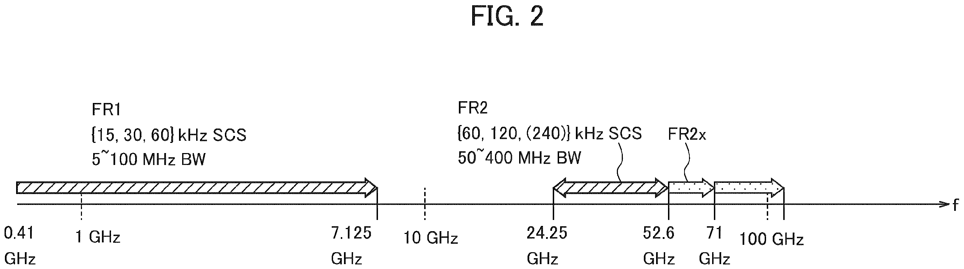

   FIG. 2 is a diagram illustrating a frequency range used in radio communication system 10.
[FIG. 3]

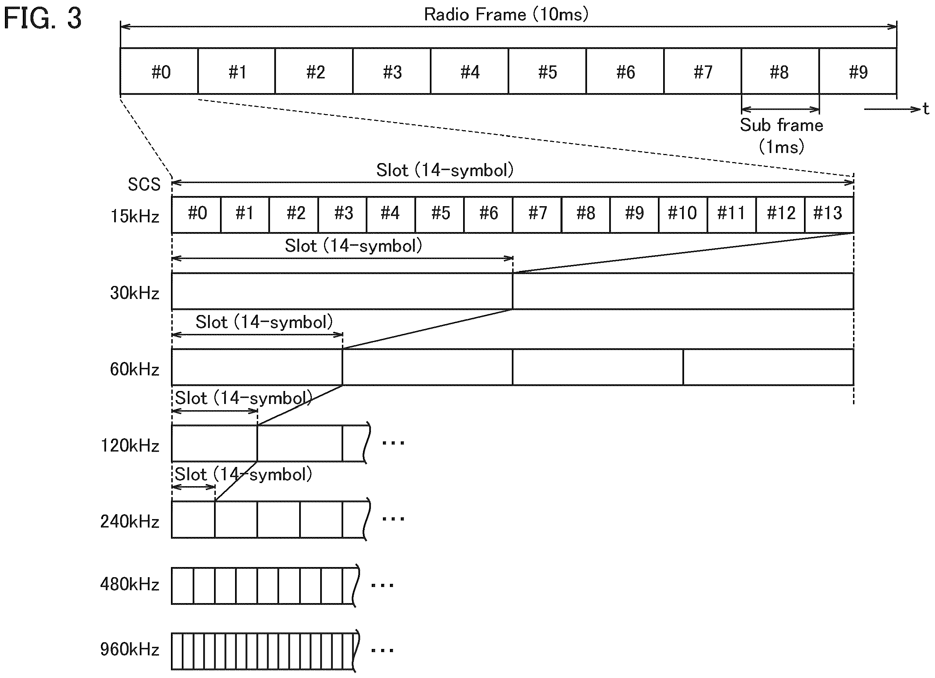

   FIG. 3 is a diagram showing a configuration example of a radio frame, a sub-frame and a slot used in radio communication system 10.
[FIG. 4]

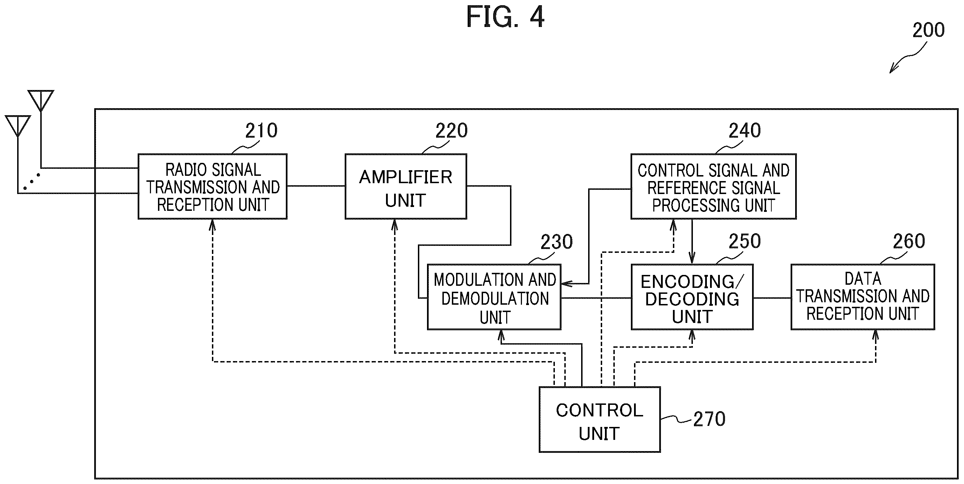

   FIG. 4 is a functional block diagram of the UE 200.
[FIG. 5]

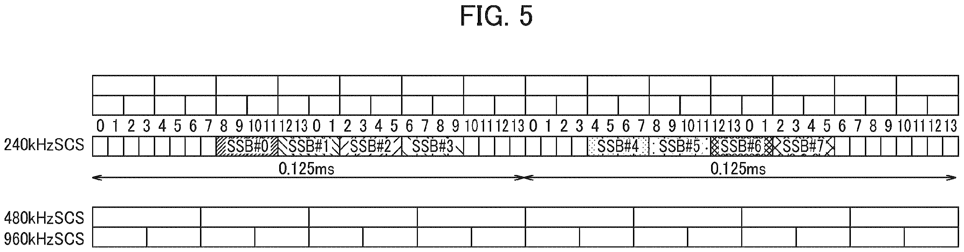

   FIG. 5 is a diagram showing a schematic configuration example of an SSB pattern (pattern E) and a plurality of SCSs.
[FIG. 6]

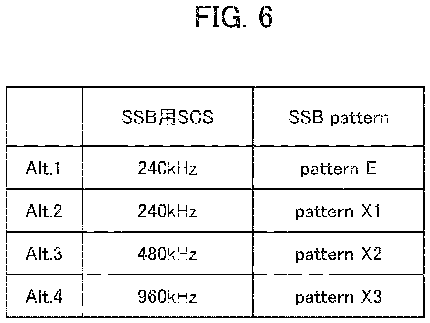

   FIG. 6 is a diagram showing an example of a combination of an SSB SCS and an SSB pattern when 960 kHz is applied as the data and/or control SCS.
[FIG. 7A]

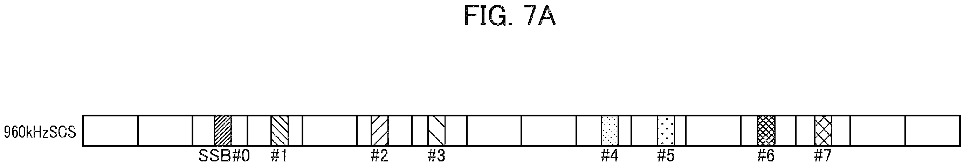

   FIG. 7 A is a diagram showing an example (unit 1) of an SSB pattern applied to a 960 kHz SCS.
[FIG. 7B]

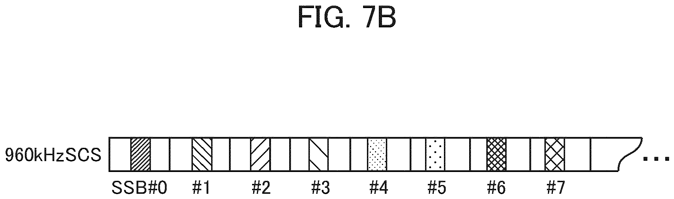

   FIG. 7 B is a diagram showing an example (unit 2) of an SSB pattern applied to a 960 kHz SCS.
[FIG. 8]

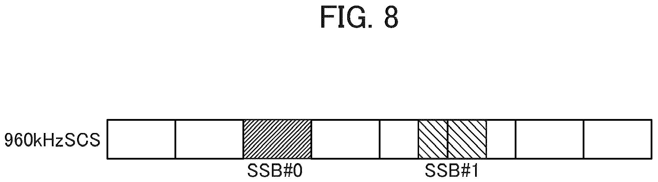

   FIG. 8 is a diagram showing an example (unit 2) of an SSB pattern applied to a 960 kHz SCS.
[FIG. 9]

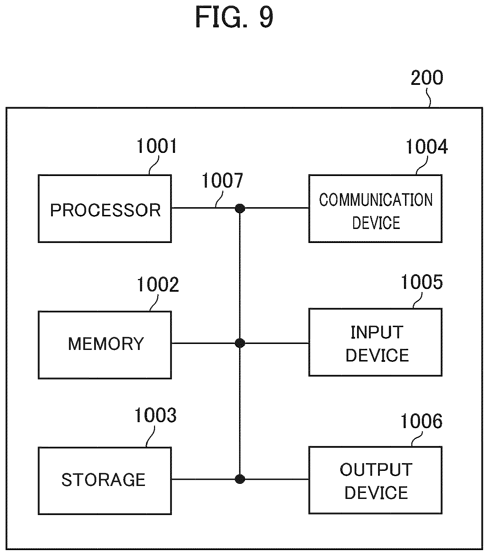

   FIG. 9 is a diagram showing an example of a hardware configuration of the UE 200.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

### (1)Overall schematic configuration of the radio communication system

FIG. 1 is an overall schematic configuration diagram of a radio communication system 10 according to this embodiment. The radio communication system 10 is a 5 G New Radio (NR) compliant radio communication system and includes a Next Generation-Radio Access Network 20 (UE 200, User Equipment, UE), NG-RAN 20, and terminal 200. The radio communication system 10 may be a radio communication system that follows a scheme called Beyond 5G, 5G Evolution or 6 G.

The NG-RAN 20 includes a radio base station 100 (hereinafter, gNB 100). The specific configuration of radio communication system 10 including the number of gNBs and UEs is not limited to the example shown in FIG. 1.

The NG-RAN 20 actually includes a plurality of NG-RAN Nodes, specifically gNBs (or ng-eNBs), and is connected to a core network (5GC, not shown) according to 5G. The NG-RAN 20 and 5 GC may be expressed simply as a "network".

The gNB 100 is a radio base station according to 5G, and executes radio communication according to the UE 200 and 5G. By controlling radio signals transmitted from a plurality of antenna elements, the gNB 100 and the UE 200 can support Massive MIMO (Multiple-Input Multiple-Output) for generating antenna beams with higher directivity (hereinafter beam BM), carrier aggregation (CA) for bundling a plurality of component carriers (CC), and dual connectivity (DC) for simultaneously communicating between the UE and each of the two NG-RAN nodes.

The gNB 100 can transmit a plurality of beams BM having different transmission directions (May simply be referred to as direction, or radial direction or coverage, etc.) by dividing them into space and time. Note that the gNB 100 may simultaneously transmit a plurality of beams BM.

The radio communication system 10 may correspond to a plurality of frequency ranges (FR). FIG. 2 shows the frequency range used in radio communication system 10.
▪FR 1: 410 MHz to 7.125 GHz
▪FR 2: 24.25 GHz to 52.6 GHz

In FR 1, 15, 30 or 60 kHz Sub-Carrier Spacing (SCS) may be used and a 5 ~ 100 MHz bandwidth (BW) may be used. FR 2 is a higher frequency than FR 1, and an SCS of 60 or 120 kHz (240 kHz may be included) may be used, and a bandwidth (BW) of 50 ~ 400 MHz may be used.

The SCS may be interpreted as numerology. Numerology is defined in 3 GPP TS 38.300 and corresponds to one subcarrier spacing in the frequency domain.

Furthermore, radio communication system 10 also supports a higher frequency band than the frequency band of the FR 2. Specifically, radio communication system 10 supports the frequency band from 52.6 GHz up to 71 GHz. Such a high frequency band may be referred to as "FR2x" for convenience.

To solve this problem, when using a band above 52.6 GHz, cyclic prefix-orthogonal frequency division multiplexing (CP-OFDM)/discrete Fourier transform-spread (DFT-S-OFDM) with larger sub-carrier spacing (SCS) may be applied.

In a high frequency band such as FR2x, as described above, an increase in phase noise between carriers becomes a problem. This may require the application of a larger (wider) SCS or a single carrier waveform.

The larger the SCS, the shorter the symbol/CP (cyclic prefix) and slot periods (if the 14 symbol/slot configuration is maintained). FIG. 3 shows a configuration example of a radio frame, a sub-frame and a slot used in radio communication system 10. Table 1 shows the relationship between the SCS and the symbol period.

**[Table 1]**

| SCS | 15 kHz | 30 kHz | 60 kHz | 120 kHz | 240 kHz | 480 kHz | 960 kHz |
|---|---|---|---|---|---|---|---|
| Symbol Period (Unit: µs) | 66.6 | 33.3 | 16.65 | 8.325 | 4.1625 | 2.08125 | 1.040625 |

As shown in Table 1, if the 14 symbol/slot configuration is maintained, the larger (wider) the SCS, the shorter the symbol period (and slot period). The symbol period may be referred to as a symbol length, a time direction or a time region. The frequency direction may also be referred to as a frequency domain, a resource block, a subcarrier, a Bandwidth part (BWP), or the like.

The number of symbols constituting 1 slot is not necessarily 14 (For example, 28, 56 symbols). The number of slots per subframe may vary depending on the SCS.

In radio communication system 10, an SSB (SS/PBCH Block) composed of a synchronization signal (SS) and a physical broadcast channel (PBCH) may be used.

The SSB is periodically transmitted from the network in order for the UE 200 to perform cell ID and reception timing detection when starting communication. In NR, the SSB is also used to measure the reception quality of each cell. The transmission period (periodicity) of the SSB may be 5, 10, 20, 40, 80, 160 milliseconds, or the like. The UE 200 in the initial access may be assumed to have a transmission cycle of 20 milliseconds.

The network (NG-RAN 20) can notify the UE 200 of the index indication (ssb-PositionsInBurst) of the SSB actually transmitted by signaling the system information (SIB 1) or the radio resource control layer (RRC).

The SS is composed of a primary synchronization signal (PSS) and a secondary synchronization signal (SSS).

The PSS is a known signal that the UE 200 first attempts to detect in the cell search procedure. The SSS is a known signal transmitted to detect the physical cell ID in the cell search procedure.

The PBCH includes information necessary for the UE 200 to establish frame synchronization with the NR cell formed by the gNB 100 after detecting the SS/PBCH block, such as a system frame number (SFN) and an index for identifying symbol positions of a plurality of SS/PBCH blocks in a half frame (5 milliseconds).

The PBCH may also include system parameters required to receive system information (SIB). The SSB also includes a reference signal for broadcast channel demodulation (DMRS for PBCH). DMRS for PBCH is a known signal sent to measure the radio channel state for PBCH demodulation.

### (2)Function block configuration of radio communication system

Next, the functional block configuration of radio communication system 10 will be described. Specifically, the functional block configuration of the UE 200 will be described.

FIG. 4 is a functional block diagram of the UE 200. As shown in FIG. 4, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260 and a control unit 270.

The radio signal transmission and reception unit 210 transmits and receives radio signals in accordance with NR. The radio signal transmission and reception unit 210 supports Massive MIMO, CA with multiple CCs bundled together, and DC with simultaneous communication between the UE and each of the 2 NG-RAN Nodes.

Also, in this embodiment, the radio signal transmission and reception unit 210 can receive the SSB. In this embodiment, the radio signal transmission and reception unit 210 constitutes reception unit.

Specifically, the radio signal transmission and reception unit 210 receives the SSB transmitted from the gNB 100 using the beam BM (see FIG. 1). The beam BM may be a directional beam or a nondirectional beam.

The maximum number of beams used for SSB transmission is, for example, 64 (for 3 GPP Release 15 (FR 2)), but the maximum number of beams may be extended to cover a certain geographic area with narrow beams. In this case, the number of SSBs is also 64 or more, and a value of # 64 or later may be used as an index (SSB index) for identifying the SSBs.

The amplifier unit 220 is composed of a PA (Power Amplifier)/LNA (Low Noise Amplifier) and the like. The amplifier unit 220 amplifies the signal output from the modulation and demodulation unit 230 to a predetermined power level. The amplifier unit 220 also amplifies the RF signal output from the radio signal transmission and reception unit 210.

The modulation and demodulation unit 230 performs data modulation/demodulation, transmission power setting, resource block allocation and the like for each predetermined communication destination (e.g., gNB 100). In the modulation and demodulation unit 230, Cyclic Prefix-Orthogonal Frequency Division Multiplexing (CP-OFDM)/Discrete Fourier Transform-Spread (DFT-S-OFDM) may be applied. The DFT-S-OFDM may be used not only in the uplink (UL) but also in the downlink (DL).

The control signal and reference signal processing unit 240 executes processing relating to various control signals transmitted and received by the UE 200 and processing relating to various reference signals transmitted and received by the UE 200.

Specifically, the control signal and reference signal processing unit 240 receives various control signals transmitted from the gNB 100 via a predetermined control channel, for example, a control signal of the radio resource control layer (RRC). The control signal and reference signal processing unit 240 transmits various control signals to the gNB 100 through a predetermined control channel.

The control signal and reference signal processing unit 240 performs processing using reference signals (RS) such as the Demodulation Reference Signal (DMRS) and the Phase Tracking Reference Signal (PTRS).

The DMRS is a reference signal (pilot signal) known between a base station and a terminal of each terminal for estimating a fading channel used for data demodulation. The PTRS is a reference signal for each terminal for the purpose of estimating phase noise which becomes a problem in a high frequency band.

In addition to DMRS and PTRS, the reference signal may include a Channel State Information-Reference Signal (CSI-RS), a Sounding Reference Signal (SRS), and a Positioning Reference Signal (PRS) for position information.

The channel includes a control channel and a data channel. The control channel may include a PDCCH (Physical Downlink Control Channel), a PUCCH (Physical Uplink Control Channel), a RACH (Downlink Control Information (DCI) with Random Access Channel, Random Access Radio Network Temporary Identifier (RA-RNTI)), a Physical Broadcast Channel (PBCH), and the like.

The data channels include PDSCH (Physical Downlink Shared Channel) and PUSCH (Physical Uplink Shared Channel). Data may refer to data transmitted over a data channel.

PUCCH may be interpreted as a UL physical channel used to transmit Uplink Control Information (UCI). The UCI may be transmitted by either PUCCH or PUSCH, depending on the situation. Note that the downlink control information (DCI) may always be transmitted by the PDCCH and may not be transmitted through the PDSCH.

The UCI may include at least either an ACK/NACK of a hybrid automatic repeat request (HARQ), a scheduling request (SR) from UE 200, and Channel State Information (CSI).

Also, the timing of transmitting the PUCCH and the radio resources may be controlled by the DCI as well as the data channel.

The encoding/decoding unit 250 executes data division/connection, channel coding/decoding and the like for each predetermined communication destination (gNB 100 or other gNB).

Specifically, the encoding/decoding unit 250 divides the data output from the data transmission and reception unit 260 into predetermined sizes, and executes channel coding on the divided data. The encoding/decoding unit 250 decodes the data output from the modulation and demodulation unit 230 and connects the decoded data.

The data transmission and reception unit 260 sends and receives protocol data units (PDU) and service data units (SDU). Specifically, the data transmission and reception unit 260 performs assembly/disassembly of PDUs/SDUs in a plurality of layers (Media access control layer (MAC), radio link control layer (RLC), and packet data convergence protocol layer (PDCP), etc.). The data transmission and reception unit 260 executes error correction and retransmission control of the data based on the hybrid automatic repeat request (ARQ).

The control unit 270 controls each functional block constituting the UE 200. Specifically, in this embodiment, the control unit 270 performs control over the subcarrier spacing (SCS) for the SSB and the setting of the SCS for data and/or control.

Specifically, the control unit 270 may assume that the SCS for a single SSB is applied to the data and/or control SCS when using a high frequency band such as FR 2 x. In other words, even if it is defined that a plurality of data and/or control SCSs (For example, 120 kHz, 240 kHz) are applicable, only one SCS (For example, 960 kHz) may be used for the SSB.

The data may refer to user data, and the control may refer to various control signals transmitted via the control channel.

Alternatively, the control unit 270 may assume that the SCS for SSB also applies to the SCS for data and/or control when using a high frequency band such as FR 2 x.

For example, if the SCS for the SSB is 240 kHz, the SCS for data and/or control may be assumed to be the same, i.e., 240 kHz.

The setting of the SCS is not limited to a high frequency band such as FR2x, and may be applied to a case where a frequency band different from a frequency band including one or more frequency ranges (FR1, FR2) is used.

Alternatively, the control unit 270 may assume a single SCS for the SSB when using a different frequency band including a high frequency band such as FR 2 x. That is, the control unit 270 may assume a single SCS (For example, 960 kHz) for the SSB, regardless of the data and/or control SCS settings.

When the SCS for a low frequency band including FR1 and FR2 is applied in a different frequency band including a high frequency band such as FR2x, the control unit 270 may assume a pattern of SSB associated with the SCS for the relevant frequency band including FR1 and FR2.

The SSB pattern is defined, for example, in 3 GPP TSTS 38.101 - 1/2 5.4.3.3 (Synchronization raster entries for each operating band). More specifically, for the initial access of the UE 200, the FR 2 specifies an SSB pattern (Case D, hereinafter referred to as pattern D) when a 120 kHz SCS is applied and an SSB pattern (Case E, hereinafter referred to as pattern E) when a 240 kHz SCS is applied. The specific SSB pattern is defined in Chapter 4.1 of 3 GPP TS 38.213.

Further, the control unit 270 may assume that, in the case of the initial access of the UE 200, a specific SCS (For example, 240 kHz) for the SSB and a specific pattern (For example, pattern E) of the SSB are associated with each other.

In this case, a single SCS and a single SSB pattern may be specified. Alternatively, for each frequency band (Operating band, may be narrower than the frequency range), two SCSs for the SSB may be associated with a particular SSB pattern.

### (3)Operation of radio communication system

Next, the operation of radio communication system 10 will be described. Specifically, operations related to the setting of the subcarrier spacing (SCS) for the SSB and the SCS for data and/or control in the UE 200 will be described.

### (3.1) Assumptions

As described above, when NR-U is applied in the frequency band of 52.6 ~ 71 GHz, a wide SCS such as 960 kHz has advantages such as efficient coexistence by providing a channel bandwidth (about 2 GHz) equivalent to that of IEEE 802.11 ad/ay, and reduction of PTRS overhead.

On the other hand, it is desirable that the number of SCSs supported for the 52.6 - 71 GHz frequency band be minimized in consideration of implementation and the like.

For example, when NR-U is applied in the 52.6 - 71 GHz frequency band, it is contemplated that a numerology (For example, a 960 kHz SCS) to support one 2 GHz bandwidth and another numerology (For example, a 120 kHz SCS) based on a simple extension of FR2 may be sufficient, while other numerologies may not be supported.

If the simple extension of FR2 (For example, a 120 kHz SCS) is applied to the 52.6 ~ 71 GHz frequency band, the specifications of 3 GPP Release - 15/16 are considered to be largely reusable. However, it is clear that the application of 960 kHz SCS requires special treatment that is different from 3 GPP Release - 15/16.

When a 960 kHz SCS is applied, it is expected that there will be various timing-related effects due to the reduced symbol and slot time (length).

As described above, in the initial access of the UE 200 by the NR-only standalone (SA), basically only a single SCS for SSB and a single SSB pattern are designated for each frequency band (see chapter 3 GPP TS 38.101 - 1/2 5.4.3.3).

This reduces the number of hypotheses for SSB search. However, FR 2 specifies both 120 kHz SCS (pattern D) and 240 kHz SCS (pattern E) for initial access.

For example, in a high frequency band such as FR 2 x, if 120 kHz and 960 kHz are supported as SCSs for data and/or control, it is not known what the SCS supported for SSB, and also the combination of the SCS for SSB and the SCS for data and/or control, will be.

If a 960 kHz SCS is also supported, 120 kHz, 240 kHz or 960 kHz may be considered as the SCS for the SSB. However, it is desirable to avoid such initial access based on the numerology (SCS) for the three SSBs in view of operational complexity and the like.

Also, if a 120 kHz SCS is supported for data and/or control, it may be considered unnecessary to support both 120 kHz and 240 kHz SCS for SSB, and it is desirable to support only one.

If the 960 kHz SCS is not supported for the SSB, the SCS supported for the SSB and the SSB pattern supported for the SSB when the 960 kHz SCS is applied for data and/or control are unknown.

Hereinafter, an operation related to the setting of the SCS which can eliminate such inconvenience will be described.

### (3.2) Example of operation

The UE 200 may operate as follows with respect to the setting of the SCS for the SSB and the SCS for data and/or control when a wide SCS, such as 960 kHz, is applied.

Specifically, the UE 200 may assume that the SCS for a single SSB is applied to the data and/or control SCS when using a high frequency band such as FR 2 x. For example, as described above, even when a plurality of data and/or control SCSs (For example, 120 kHz, 240 kHz) are applied, only one SCS (For example, 960 kHz) may be used for the SSB.

The UE 200 may assume an SCS for a single SSB regardless of the setting of the SCS for data and/or control in a high frequency band such as FR 2 x. The SCS for the single SSB may be defined in advance by the specifications of the 3 GPP or may be instructed to the UE 200 by the network.

Alternatively, the UE 200 may reuse the 240 kHz SCS for the SSB and the SSB pattern (pattern E) if a SCS other than 960 kHz (For example, 120 kHz and/or 240 kHz) is supported as the SCS for data and/or control in a high frequency band such as FR 2 x.

FIG. 5 shows a schematic configuration example of an SSB pattern (pattern E) and a plurality of SCSs. As shown in FIG. 5, in pattern E, an SCS of 240 kHz is applied, and SSB # 0 ~ 3 is mapped across a plurality of slots. Similarly, SSB # 4 ~ 7 is mapped across a plurality of slots. Numeral 0 ~ 13 in the figure indicates a symbol number in the slot.

As also described in FIG. 3, when an SCS of 480 kHz or 960 kHz is applied, the symbol length (slot length) becomes short (The rectangular frame in the figure corresponds to the slot.).

FIG. 6 shows an example of a combination of an SSB SCS and an SSB pattern when 960 kHz is applied as the data and/or control SCS.

As shown in FIG. 6, the 240 kHz SCS for SSB and the SSB pattern (pattern E) may be reused (Alt.1). Alternatively, for each 240 kHz, 480 kHz and 960 kHz SCS, a new SSB pattern (Here, pattern X1 to X3 is assumed for convenience.) may be combined. Each of the patterns X1 to X3 may be a different pattern or a pattern in which only a part is different.

Such a new SSB pattern may satisfy the following requirements.
▪Each SSB (based on a 480 kHz or 960 kHz SCS) is mapped (That is, an SSB is not mapped across slots) into a slot based on a 960 kHz SCS.

FIGS. 7A and 7B show examples (Unit 1 and Unit 2) of SSB patterns applied to such a 960 kHz SCS.

As shown in FIGS. 7 A and 7 B, the SSB # 0 ~ 7 is mapped closed in a slot based on a 960 kHz SCS and is not mapped across a plurality of slots. The SSBs may be arranged one by one in each discontinuous slot as shown in FIG. 7A, or may be arranged one by one in each continuous slot as shown in FIG. 7B.
▪Each SSB (based on a 240 kHz SCS) is mapped in a slot based on a 960 kHz SCS (if the slot has more than 14 symbols) or in 2 consecutive slots based on a 960 kHz SCS (However, one SSB is not mapped across the boundaries of the two slots.).

FIG. 8 shows an example (unit 2) of an SSB pattern applied to such a 960 kHz SCS. As shown in FIG. 8, the SSB may be mapped (SSB # 0) into a slot (if the slot has more than 14 symbols) or mapped (SSB # 1) into two consecutive slots based on a 960 kHz SCS. In this case, the two consecutive slots to which one SSB is mapped may be limited to a case starting from the slot of the even index (# 0) such as slot # 0 and slot # 1.

Alternatively, as described above, pattern E may be reused, but in this case, slots that overlap at least a portion of the SSB may not be used for other purposes (In other words, it is not necessary to assume that the UE 200 transmits and receives signals/channels other than the SSB.).

In the initial access in a high frequency band such as FR2x, a specific SCS for SSB and an SSB pattern may be designated.

Specifically, any of the following may be designated.
▪(Alt.1): One SCS for SSB and one SSB pattern are designated for each frequency band.

For example, if a 120 kHz SCS and a 240 kHz SCS for SSB are supported, either SCS is designated for initial access of each frequency band.

Alternatively, if a 240 kHz SCS for the SSB and a 480 kHz or 960 kHz SCS are supported, either SCS is designated for initial access of each frequency band.
▪(Alt.2): For each frequency band, two SCSs for SSB and an SSB pattern corresponding to the SCS are designated.

For example, if a 480 kHz SCS or a 960 kHz SCS is supported for a 120 kHz SCS, a 240 kHz SCS, and an SSB, any two SCSs are designated for initial access of each frequency band.

It should be noted that any one of the above-mentioned (Alt.1) or (Alt.2) may be appropriately applied to the different frequency bands.

### (4)Operational effects

According to the embodiment described above, the following effects are obtained. Specifically, when the UE 200 uses a high frequency band such as FR 2 x, it can be assumed that the SCS for a single SSB is applied to the SCS for data and/or control.

Therefore, even when a wide SCS such as 960 kHz is supported in a high frequency band such as 52.6 ~ 71 GHz and many SCS are supported, the load for searching the SSB can be reduced. That is, according to radio communication system 10, even when a wide SCS such as 960 kHz is supported in a different frequency band from that of the FR1, FR2, etc., it is possible to minimize the influence on the specification of the 3 GPP and to avoid the complication of the processing relating to the initial access using the SSB in particular.

In this embodiment, the UE 200 may assume a single SCS for the SSB when using a different frequency band including a high frequency band such as FR 2 x. Therefore, even when a wide SCS such as 960 kHz is supported and many SCS are supported, the number of hypotheses for searching the SSB can be reduced, and the load for searching the SSB by the UE 200 can be further reduced.

In this embodiment, the UE 200 may assume a pattern of an SSB associated with an SCS for a low frequency band including FR1 and FR2 in a different frequency band including a high frequency band such as FR2x when the SCS for the low frequency band including FR1 and FR2 is applied. Therefore, even if many SCSs are supported, the number of hypotheses for searching the SSB can be reduced, and the load for searching the SSB by the UE 200 can be further reduced.

In this embodiment, it may be assumed that the UE 200 associates a specific SCS (For example, 240 kHz) for the SSB with a specific pattern (For example, pattern E) of the SSB in the case of initial access. Therefore, the number of hypotheses for searching the SSB can be reduced, and the load for searching the SSB can be further reduced.

### (5)Other Embodiments

Although the embodiment has been described above, it is obvious to those skilled in the art that various modifications and improvements are possible without being limited to the description of the embodiment.

For example, although the above embodiment has described an example in which an SCS of 960 kHz is mainly applied to FR2x, an SCS wider than that applied to FR1 or FR2, for example, an SCS of 480 kHz may be mainly applied to FR2x.

A block diagram (FIG. 4) used in the description of the above-described embodiment shows a block for each function unit. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that functions the transmission is called a transmission unit (transmitting unit) or a transmitter. As described above, there is no particular limitation on the method of implementation.

Furthermore, the UE 200 described above may function as a computer that performs processing of the radio communication method of the present disclosure. FIG. 9 is a diagram showing an example of a hardware configuration of the UE 200. As shown in FIG. 9, the UE 200 may be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. The hardware configuration of the UE 200 may be configured to include one or more of the devices shown in the figure, or may be configured to exclude some of the devices.

Each functional block of the UE 200 (see FIG. 4) is implemented by any hardware element or combination of hardware elements of the computer device.

Functions in the UE 200 are realized by reading predetermined software (programs) onto hardware such as the processor 1001 and the memory 1002, so that the processor 1001 performs arithmetic operations to control communication by communication device 1004, or to control at least one of reading and writing of data in the memory 1002 and the storage 1003.

The processor 1001 operates, for example, an operating system to control the entire computer. Processor 1001 may comprise a central processing unit (CPU) including interfaces to peripheral devices, controllers, arithmetic units, registers, and the like.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. Memory 1002 may be referred to as a register, cache, main memory, or the like. The memory 1002 may store programs (program codes), software modules, and the like that are capable of executing the method according to one embodiment of the present disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Devices such as the processor 1001 and the memory 1002 are connected by a bus 1007 for communicating information. The bus 1007 may be configured using a single bus or may be configured using different buses for each device.

In addition, the device may comprise hardware such as a microprocessor, a digital signal processor (DSP), an application specific integrated circuit (ASIC), a programmable logic device (PLD), a field programmable gate array (FPGA), and the hardware may implement some or all of each functional block. For example, the processor 1001 may be implemented by using at least one of these hardware.

Further, the notification of the information is not limited to the mode/embodiment described in the present disclosure, and other methods may be used. For example, notification of information may be performed by physical layer signaling (e.g., Downlink Control Information (DCI), Uplink Control Information (UCI), higher layer signaling (e.g., RRC signaling, Medium Access Control (MAC) signaling, broadcast information (Master Information Block (MIB), System Information Block (SIB)), other signals, or a combination thereof. The RRC signaling may also be referred to as an RRC message, for example, an RRC Connection Setup message, an RRC Connection Reconfiguration message, and the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, and the like of each aspect/embodiment described in the present disclosure may be changed in order as long as there is no contradiction. For example, the methods described in this disclosure use an exemplary sequence to present the elements of the various steps and are not limited to the particular sequence presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each of the aspects/embodiments described in the present disclosure may be used alone, in combination, or switched over in accordance with implementation. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channel and the symbol may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile body may be a vehicle (For example, cars, planes, etc.), an unmanned mobile body (Drones, self-driving cars, etc.), or a robot (manned or unmanned). At least one of a base station and a mobile station can be a device that does not necessarily move during the communication operation. For example, at least one of a base station and a mobile station may be an Internet of Things (IoT) device such as a sensor.

The base station in the present disclosure may be read as a mobile station (user terminal). For example, each aspect/embodiment of the present disclosure may be applied to a configuration in which communication between a base station and a mobile station is replaced with communication between a plurality of mobile stations (For example, it may be called Device-to-Device (D2D), Vehicle-to-Everything (V2X), etc.). In this case, the mobile station may have the function of the base station. In addition, words such as "up" and" down " may be replaced with words corresponding to communication between terminals (For example, "side".). For example, terms an uplink channel, a downlink channel, or the like may be read as a side channel.

Similarly, the mobile station in the present disclosure may be read as a base station. In this case, the base station may have the function of the mobile station. A radio frame may be composed of one or more frames in the time domain. Each frame or frames in the time domain may be referred to as a subframe. A subframe may be further configured by one or more slots in the time domain. The subframe may be a fixed time length (For example, 1 ms) independent of the numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. PDSCH (or PUSCH) transmitted in time units greater than the minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the sub-frame and TTI may be a sub-frame (1 ms) in the existing LTE, a period shorter than 1 ms (For example, 1 -13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. The number of slots (minislot number) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB based on the common reference point of the carrier. PRB may be defined in BWP and numbered within that BWP.

BWP may include UL BWP (UL BWP) and DL BWP (DL BWP). One or a plurality of BWPs may be set in one carrier for the UE.

At least one of the configured BWPs may be active, and the UE may not expect to send and receive certain signals/channels outside the active BWP. Note that "cell", "carrier", and the like in this disclosure may be read as "BWP".

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each apparatus may be replaced with "unit", "circuit", "device", and the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining" and "determining" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. That is, "judgment" or" decision *"* may include regarding some action as "judgment " or" decision ". Moreover, "judgment (decision)" may be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 radio communication system
20 NG-RAN
100 gNB
100 A, 100 B, 100 C radio communication nodes
200 UE
210 radio signal transmission and reception unit
220 amplifier unit
230 modulation and demodulation unit
240 control signal and reference signal processing unit
250 encoding/decoding unit
260 data transmission and reception unit
270 control unit
BM beam
1001 processor
1002 memory
1003 storage
1004 communication device
1005 input device
1006 output device
1007 bus

## Claims

1. A terminal comprising:
a reception unit that receives the synchronization signal block;
a control unit that assumes, when using a different frequency band from a frequency band including one or more frequency ranges, that a single subcarrier spacing for the synchronization signal block is applied to subcarrier spacing for data and/or control.

2. The terminal according to claim 1, wherein the control unit assumes a single subcarrier spacing for the synchronization signal block when using the different frequency bands.

3. The terminal according to claim 1, wherein the control unit assumes a pattern of the synchronization signal block associated with the subcarrier spacing for the frequency band when the subcarrier spacing for the frequency band is applied in the different frequency band.

4. The terminal according to claim 1, wherein the control unit assumes, in a case of an initial access of the terminal, that a specific subcarrier spacing for the synchronization signal block is associated with a specific pattern of the synchronization signal block.
